# EUROPEAN PATENT APPLICATION

(11) **EP 4 745 085 A1**
(43) Date of publication of application: **20.05.2026**
(21) Application number: 24839503.0
(22) Date of filing: 24.06.2024
(51) Int. Cl.: C01D 15/02, H01M 10/54

(54) **METHOD FOR PRODUCING LITHIUM HYDROXIDE**

(30) Priority: 12.07.2023 JP 2023114631
(71) Applicant: JX Metals Circular Solutions Co., Ltd., Tokyo 105-8417 (JP)
(72) Inventor: ARAKAWA, Junichi, Hitachi-shi, Ibaraki 317-0056 (JP)
(74) Representative: Arnold & Siedsma
(86) International application number: PCT/JP2024/022893
(87) International publication number: WO 2025/013610

(57) **Abstract**

A method for producing lithium hydroxide includes: a first crystallization step of concentrating a lithium hydroxide solution containing carbonate ions to precipitate and separate crystals containing lithium carbonate; and a second crystallization step of concentrating the lithium hydroxide solution after the first crystallization step in a reduced pressure atmosphere to obtain crystals containing lithium hydroxide.

## Description

### [Technical Field]

This specification discloses a method for producing lithium hydroxide.

### [Background Art]

For example, in processing for recovering metals from lithium ion battery waste, various electronic devices, salt lake brine, or ores, a lithium salt solution can be obtained, and lithium may be extracted from the lithium salt solution as lithium hydroxide.

As an example, in the processing for lithium ion battery waste, the battery powder may be leached with sulfuric acid. From the resulting metal-containing leached solution, predetermined metals are separated by neutralization or solvent extraction, thereby obtaining a lithium sulfate solution. After converting the lithium sulfate solution into a lithium hydroxide solution, lithium hydroxide can be precipitated by performing crystallization operations such as heating concentration or vacuum distillation. Literatures that disclose such processes includes, for example,

Patent Literatures 1 to 3.

### [Citation List]

### [Patent Literature]

[PTL 1] Japanese Patent No. 7185090 B
[PTL 2] Japanese Patent No. 7100217 B
[PTL 3] Japanese Patent No. 7100211 B

### [Summary of Invention]

### [Technical Problem]

A lithium hydroxide solution easily absorbs carbon dioxide from the atmosphere and may contain carbonate ions. If crystallization operations are performed on lithium hydroxide solutions containing carbonate ions, lithium carbonate is mixed into the lithium hydroxide crystals, resulting in a decrease in the purity of the lithium hydroxide. Depending on the application, lithium hydroxide with sufficiently low impurity content may be required.

This specification provides a method for producing lithium hydroxide that enables the production of lithium hydroxide with relatively high purity.

### [Solution to Problem]

The method for producing lithium hydroxide described herein includes: a first crystallization step of concentrating a lithium hydroxide solution containing carbonate ions, and precipitating and separating crystals containing lithium carbonate; and a second crystallization step of concentrating the lithium hydroxide solution after the first crystallization step in a reduced pressure atmosphere to obtain crystals containing lithium hydroxide.

### [Advantageous Effects of Invention]

According to the above method for producing lithium hydroxide, lithium hydroxide having relatively high purity can be efficiently obtained.

### [Brief Description of Drawings]

[Fig. 1] Figure 1 is a flowchart illustrating a method for producing lithium hydroxide according to an embodiment.
[Fig. 2] Figure 2is a flowchart illustrating an example of processing for lithium ion battery waste.

### [Description of Embodiments]

The embodiments of the method for producing lithium hydroxide described above will be described below in detail.

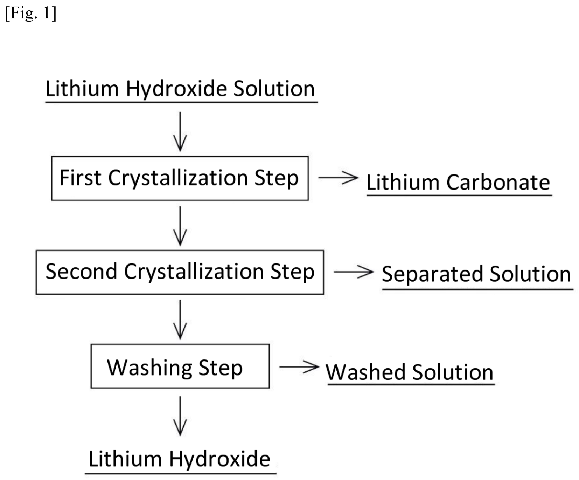

The method for producing lithium hydroxide according to an embodiment targets a lithium hydroxide solution containing carbonate ions and includes performing at least two crystallization operations, a first crystallization step and a second crystallization step, as illustrated in figure 1.

In the first crystallization step, the lithium hydroxide solution containing carbonate ions is concentrated and crystals containing lithium carbonate are precipitated and separated. This removes some carbonate ions from the lithium hydroxide solution. In the subsequent second crystallization step, the lithium hydroxide solution that has undergone the first crystallization step is concentrated in the reduced pressure atmosphere. At this time, the carbonate ions are further removed by creating a reduced pressure atmosphere. As a result, high purity lithium hydroxide crystals are obtained in the second crystallization step.

### (First Crystallizing Step)

Various lithium hydroxide solutions can be used as the lithium hydroxide solution for the first crystallization step, as long as they contain hydroxide and lithium ions. Typically, the target may be lithium hydroxide solutions obtained in the processing for lithium ion battery waste, as described below.

The lithium hydroxide solution is alkaline and tends to absorb carbon dioxide from the atmosphere. The lithium hydroxide solution can contain carbonate ions due to absorption of carbon dioxide and the like. If the lithium hydroxide solution containing carbonate ions is concentrated and crystallized as it is, the resulting lithium hydroxide crystals are contaminated with lithium carbonate, resulting in lithium hydroxide with low purity. Here, especially when the above crystallization is performed in an air atmosphere, carbon dioxide is absorbed into the atmosphere during crystallization, and more lithium carbonate is mixed into the lithium hydroxide.

To address this, in this embodiment, a first crystallization step is performed to precipitate and separate lithium carbonate in advance, prior to the second crystallization step, which mainly precipitates lithium hydroxide.

In the first crystallization step, the lithium hydroxide solution is concentrated by heating and evaporating the lithium hydroxide solution, for example. Then, due to the difference in solubility between lithium hydroxide and lithium carbonate, lithium carbonate mainly precipitates and lithium carbonate-dominated crystals are formed. Subsequently, crystals containing lithium carbonate are separated by solid-liquid separation such as filtration to obtain a lithium hydroxide solution that has removed the carbonate ions to some extent.

When lithium hydroxide solution is heated and concentrated in the first crystallization step, it is preferable to heat the lithium hydroxide solution to 90°C or less, especially 80°C to 90°C. If the heating temperature is too low, the concentration may require a longer period of time.

The atmosphere during concentration of the lithium hydroxide solution in the first crystallization step is not limited. Even if carbon dioxide in the atmosphere is absorbed during concentration by using it as an air atmosphere, the precipitation of lithium carbonate will result in a lithium hydroxide solution with reduced carbonate ions after the first crystallization step. From the viewpoint that the crystallization can be easily performed without requiring equipment to control the atmosphere, it is preferable to perform the concentration of the first crystallization step in the air atmosphere.

For example, the carbonate ion concentration of the lithium hydroxide solution before the first crystallization step may be 0.1 g/L to 2.0 g/L and the lithium ion concentration may be 5 g/L to 30 g/L, while the carbonate ion concentration of the lithium hydroxide solution after the first crystallization step may be 0.1 g/L to 5.0 g/L and the lithium ion concentration may be 28 g/L to 35 g/L. Each concentration in the solution is measured by ICP (high-frequency inductively coupled plasma) for lithium ions and by TOC meter (total organic carbon meter) for carbonate ions.

A part of the lithium hydroxide solution after the first crystallization step may be used as a pH adjusting agent in the processing for lithium ion battery waste as described below. In this case, the remaining part of the lithium hydroxide solution may be subjected to the second crystallization step described below.

### (Second Crystallizing Step)

In the second crystallization step, the lithium hydroxide solution after the above first crystallization step is concentrated in a reduced pressure atmosphere. The concentration in the reduced pressure atmosphere releases the carbonate ion components, which can be present in the lithium hydroxide solution, into the atmosphere, and the components are removed. As a result, crystals containing lithium hydroxide with high purity are obtained. Lithium hydroxide can thus be produced.

Specifically, the reduced pressure atmosphere is preferably 0.06 atm. If the pressure is too high, the lithium hydroxide solution may be insufficiently degassed and the carbonate content may remain in the solution, causing lithium carbonate to precipitate easily. An evaporator or the like may be used to achieve such a reduced pressure atmosphere during the concentration.

To concentrate the lithium hydroxide solution, it is preferable to heat the lithium hydroxide solution to 60°C or more, especially 60°C to 65°C. If the heating temperature in the second crystallization step is too low, the concentration may require a longer period of time.

In the second crystallization step, the lithium hydroxide solution is suitably cooled after heating as described above. As the temperature is lowered, the solubility of lithium hydroxide decreases while that of lithium carbonate increases, so cooling after heating allows lithium hydroxide to precipitate while maintaining the dissolution of lithium carbonate. This makes it possible to produce lithium hydroxide with even lower lithium carbonate content. Here, for example, it can be cooled to 10°C to 25°C.

When cooling in this manner, it is preferable to maintain the reduced pressure atmosphere described above during concentration. This is to inhibit carbonation of precipitated lithium hydroxide.

The crystals containing lithium hydroxide can then be separated from the liquid and taken out by solid-liquid separation. The crystals containing lithium hydroxide obtained in the second crystallization step, for example, may contain 0.3 mass% or less of carbonic acid. The components and their contents in the crystals are measured by ICP-MS (Inductively Coupled Plasma Mass Spectrometry) and a CO₂ precision quantitative analyzer. Such high purity lithium hydroxide is suitable for use as a raw material in the production of lithium ion batteries.

On the other hand, the separated solution separated from crystals containing lithium hydroxide by solid-liquid separation is a lithium hydroxide solution, which can be used as a pH adjusting agent in the processing for lithium ion battery waste as described below.

### (Washing Step)

The crystals containing lithium hydroxide obtained in the second crystallization step may contain sulfur. For example, if the lithium hydroxide solution for the first crystallization step is prepared by the hydroxylation step using the lithium sulfate solution, as in the hydroxylation step described below in the processing for lithium ion battery waste, sulfur derived from the lithium sulfate solution may be included in the crystals containing lithium hydroxide.

If the crystals containing lithium hydroxide contain sulfur, it is preferable to perform a washing step to remove the sulfur.

In the washing step, lithium hydroxide crystals are washed with a washing solution. Here, for example, as a repulp washing, the crystals containing lithium hydroxide can be fed into the washing solution to form a slurry, which is subjected to operations such as agitation as necessary, and the lithium hydroxide crystals can be extracted by solid-liquid separation. Pure water can be used as the washing solution. Such repulp washing may be repeated multiple times, not just once.

Lithium hydroxide produced after the washing step will have a reduced sulfur content. Specifically, the sulfur content of the lithium hydroxide may be, for example, 100 ppm by mass or less.

The washed solution generated after washing in the washing step may contain, for example, 28 g/L to 35 g/L of lithium ions, and can be used in the neutralization and extraction steps as a pH adjusting agent.

### (Processing for Lithium Ion Battery Waste)

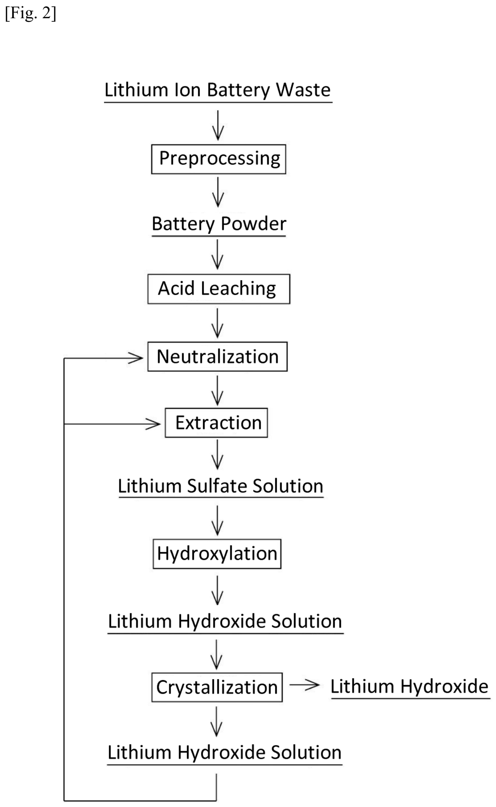

In the processing for lithium ion battery waste, as shown in Figure 2, as an example, the lithium ion battery waste is preliminary processed to obtain powder of batteries (battery powder), which may then be subjected to acid leaching, neutralization, extraction, hydroxylation, and crystallization in this order. The details are described below.

The lithium ion battery waste of interest refers to lithium ion batteries which can be used in various electronic devices such as mobile phones and which have been discarded due to the end of the battery product's life, manufacturing defects, or other reasons. The recovery of valuable metals from such lithium ion battery waste is preferred in terms of effective utilization of resources. The lithium ion battery waste refers to lithium ion batteries to be recycled, regardless of whether the lithium ion batteries are traded for value, free of charge, or treated as industrial waste.

The lithium ion battery waste has a housing containing aluminum as an exterior that wraps around the lithium ion battery. Examples of the housing include those made only of aluminum and those containing aluminum, iron, aluminum laminate, and the like. The lithium ion battery waste may also contain, in the above housing, aluminum foils (cathode substrates) to which cathode active materials are applied and fixed by, for example, polyvinylidene fluoride (PVDF) or other organic binders, the cathode active materials being composed of one single metal oxide containing lithium and one selected from the group consisting of nickel, cobalt and manganese, or a composite metal oxides containing lithium and two or more of those, or the like. In addition, the lithium ion battery waste may also contain copper, iron, or the like. Further, the housing of the lithium ion battery waste typically contains an electrolytic solution having an electrolyte such as lithium hexafluorophosphate dissolved in an organic solvent. As the organic solvent, ethylene carbonate, diethyl carbonate or the like may be used, for example.

In many cases, the lithium ion battery waste is subjected to preprocessing. The preprocessing may include at least one of roasting, crushing and sieving. The lithium ion battery waste becomes battery powder through the preprocessing. The roasting, crushing, and sieving in the preprocessing may optionally be performed, respectively, or they may be performed in any order. The battery powder means a powder obtained by subjecting the lithium ion battery waste to any preprocessing to concentrate cathode material components. The battery powder may be obtained as a powder by crushing and sieving the lithium ion battery waste with or without roasting to concentrate the cathode material components.

In the roasting, the above lithium ion battery waste is heated. When the roasting is carried out, metals such as lithium and cobalt contained in the lithium ion battery waste is changed to an easily dissolvable form. During the roasting, the lithium ion battery waste is preferably heated by maintaining it in a temperature range of, for example, from 450°C to 1000°C, preferably in a temperature range of from 600°C to 800°C, for 0.5 to 4 hours. In the roasting, one of the heating in an air atmosphere or the heating in an inert atmosphere such as nitrogen can be carried out, as well as both the heating in the air atmosphere and the heating in the inert atmosphere may be carried out in this order or opposite order. The roasting can be of butch type or continuous type. For example, the batch type includes a stationary furnace, the continuous type includes a rotary kiln furnace, and other various types of furnaces can also be used.

During the roasting, at least a part of the electrolytic solution is removed by evaporation or the like from the lithium ion battery waste. In many cases, when the lithium ion battery waste is heated during the roasting, the components of the internal electrolytic solution are sequentially evaporated, starting with the component having a lower boiling point. When the roasting is carried out, the electrolytic solution is removed and rendered harmless, and the organic binder is decomposed to promote separation between the aluminum foil and the cathode active material during crushing and sieving, which will be described below. Although the composition of the cathode active material changes due to roasting, the material that has undergone the roasting is also referred to as the cathode active material.

After the roasting, the crushing can be carried out to remove cathode active materials and the like from the housing of the lithium ion battery waste. The crushing selectively separates the cathode active materials from the aluminum foils to which the cathode active materials are applied, while destroying the housings of the lithium ion battery waste. Various known apparatuses or devices can be used in the crushing. In particular, it is preferable to use an impact-type crusher that can crush lithium ion battery waste by applying an impact while cutting it. Examples of the impact-type crusher include a sample mill, a hammer mill, a pin mill, a wing mill, a tornado mill, and a hammer crusher. It should be noted that a screen can be installed at an exit of the crusher, whereby the lithium ion battery waste is discharged from the crusher through the screen when it is crushed to a size that can pass through the screen.

After crushing the lithium ion battery waste, the sieving is performed by sieving it using a sieve having appropriate openings. Thus, aluminum or copper remains on the sieve, and the battery powder that has removed aluminum or copper to some extent can be obtained under the sieve.

In the acid leaching, the battery powder are leached with an acidic leaching solution such as sulfuric acid. As a result, the metals in the battery powder are dissolved to obtain a solution that has dissolved the metals in the battery powder, and a leached residue that has remained undissolved. As used herein, the solution in which the metals in the battery powder are dissolved in each step from the end of leaching in the acid leaching to the extraction of the nickel ions as described below is also referred to as a metal-containing solution. The processing after the acid leaching is also referred to as wet processing.

In the acid leaching, the pH of the acidic leaching solution or leached solution may be, for example, less than 3.5. Moreover, an oxidation-reduction potential (ORP value, based on silver/silver chloride potential) may be 100 mV or less. After leaching, solid-liquid separation may be performed to separate the leached residue from the metal-containing solution, but the solid-liquid separation may not be performed and the metal-containing solution containing the leached residue may be subjected to the next neutralization.

When the metal-containing solution obtained in the acid leaching contains aluminum ions and/or iron ions, neutralization can be performed to increase the pH of the metal-containing solution to separate a neutralized residue to obtain a neutralized solution. The neutralization may include an aluminum removal stage and an iron removal stage. However, if the metal-containing solution does not contain aluminum ions and/or iron ions, the aluminum removal step and/or iron removal step may be omitted.

In the aluminum removal step, the pH of the metal-containing solution is increased to precipitate at least a part of the aluminum ions and remove them by solid-liquid separation. At this time, for example, when the pH is increased in the range of 4.0 to 5.0 with a pH adjusting agent at a solution temperature of 50°C to 90°C, the aluminum ions can be effectively separated while suppressing precipitation of nickel ions and/or cobalt ions. In the iron removal step, an oxidizing agent is added and a pH adjusting agent is further added to increase the pH in a range of 4.0 to 5.0. As a result, the iron ions are oxidized from divalent to trivalent, and precipitated as a solid such as an oxide or iron hydroxide (Fe(OH)3), which can be removed by solid-liquid separation. An oxidation-reduction potential (ORP value, based on silver/silver chloride potential) during oxidation is preferably 300 mV to 900 mV.

Examples of the pH adjusting agent used in neutralization in the above aluminum removal stage and iron removal stage include lithium hydroxide, sodium hydroxide, sodium carbonate, and ammonia. When lithium hydroxide is used, it is possible to prevent sodium and the like from being mixed into lithium hydroxide recovered in a hydroxylation step described below. In particular, it is preferable to use the lithium hydroxide solution after the first crystallization step described above or the separated solution (lithium hydroxide solution) obtained in the second crystallization step as a pH adjusting agent.

After undergoing the above neutralization as necessary, each metal ion in the metal-containing solution can be extracted by solvent extraction.

As an example, more specifically, the extraction is carried out by bringing a solvent (organic phase) containing a predetermined extracting agent into contact with a metal-containing solution (aqueous phase), and stirring and mixing them, typically with a mixer, for example, for 5 to 60 minutes, to allow the metal ions to react with the extracting agent. The extracting agent may be diluted with an aromatic, paraffinic, naphthenic, or other hydrocarbon-based organic solvent to a concentration of 10% to 30% by volume and used as a solvent. The temperature during extraction is from ordinary temperature (approximately 15 to 25°C) to 60°C or lower, and it is preferably carried out at 35 to 45°C for reasons of an extraction rate, phase separation, and evaporation of the organic solvent. The mixed organic phase and aqueous phase are then separated in a settler based on a difference in specific gravity. At the time of extraction, it is desirable to carry out extraction by countercurrent type multistage extraction in which directions of the flow of the aqueous phase and the solvent used for each extraction are opposite to each other. By doing so, the extraction of metal ions other than the target metal ions can be suppressed, and the extraction rate of the target metal ions can be increased. In the case of the countercurrent type multistage extraction, it is effective to set the equilibrium pH at the first stage of extraction to a value in the above range, and decrease the equilibrium pH at the time of extraction through successive stages.

Extraction in the processing for lithium ion battery waste may include, for example, extraction of manganese ions, extraction of cobalt ions, and extraction of nickel ions, in this order. When aluminum ions remain in the metal-containing solution after neutralization, the aluminum ions can also be extracted when extracting the manganese ions.

For adjusting the equilibrium pH in at least one of the extraction of manganese ions, cobalt ions, and nickel ions, the lithium hydroxide solution after the first crystallization step described above or the separated solution (lithium hydroxide solution) obtained in the second crystallization step can be used.

In the extraction of the manganese ions, an extracting agent containing a phosphate ester-based extracting agent is preferably used. Specific examples of the phosphate ester-based extracting agent include di-2-ethylhexyl phosphate (abbreviated name: D2EHPA, for example, trade name: DP8R). Further, the extracting agent may be a mixture of the phosphate ester-based extracting agent and an oxime-based extracting agent. In this case, the oxime-based extracting agent is preferably aldoxime or based on aldoxime. Specific examples include 2-hydroxy-5-nonylacetophenone oxime (trade name: LIX84), 5-dodecyl salicylaldoxime (trade name: LIX860), a mixture of LIX84 and LIX860 (trade name: LIX984), 5-nonyl salicylaldoxime (trade name: ACORGAM5640) and the like. During extraction, an equilibrium pH is preferably 2.3 to 3.5, and more preferably 2.5 to 3.0. As the pH adjusting agent used at this time, a lithium hydroxide solution is preferably used, and for example, a lithium hydroxide solution obtained in a hydroxylation step described below can be used.

After the manganese ions are extracted, the cobalt ions can be extracted and separated from the metal-containing solution by a solvent extraction method. It is preferable to use a solvent containing a phosphoric acid-based extracting agent, especially a phosphonate ester-based extracting agent, for the extraction of the cobalt ions. Particularly, 2-ethylhexyl 2-ethylhexylphosphonate (trade name: PC-88A, Ionquest 801) is preferable from the viewpoint of separation efficiency between nickel and cobalt. When extracting the cobalt ions, the equilibrium pH during extraction is preferably 5.0 to 6.0, and more preferably 5.0 to 5.5. If the pH is less than 5.0, the cobalt ions may not be sufficiently extracted into the solvent.

During the extraction of cobalt ions, not only cobalt ions but also nickel ions and lithium ions may be somewhat extracted into the solvent. In this case, if necessary, the solvent which extracted the cobalt ions may be subjected to one or more scrubbing processes using a scrubbing solution to remove nickel ions and lithium ions that may be contained in the solvent. The scrubbing solution can be, for example, a sulfuric acid solution having a pH of 3.5 to 5.5. The scrubbed solution may contain nickel ions and lithium ions. Therefore, it is desirable to mix part or all of the scrubbed solution with the metal-containing solution after manganese extraction and use it as an extracting solution to carry out cobalt extraction. As a result, the nickel ions and lithium ions can be circulated or retained in the wet processes without losing them. However, if the solvent used to extract the cobalt ions does not contain nickel ions or lithium ions, the scrubbing may not be performed.

The solvent containing the cobalt ions is then subjected to stripping. A stripping solution used for the stripping may be any inorganic acid such as sulfuric acid, hydrochloric acid, and nitric acid, but sulfuric acid is preferable when a sulfate is obtained in the next crystallization. Here, it is carried out under pH conditions such that all the cobalt ions transfer from the solvent to the stripping solution as much as possible. Specifically, the pH is preferably in the range of 2.0 to 4.0, and more preferably in the range of 2.5 to 3.5. The stripped solution can be subjected to crystallization. In the crystallization, the stripped solution is heated to, for example, 40°C to 120°C and concentrated. As a result, the cobalt ions are crystallized to obtain a cobalt salt such as cobalt sulfate. The cobalt salt thus obtained preferably has a nickel content of 5 ppm by mass or less, and have sufficiently removed the nickel, so that it can be effectively used as a raw material for producing lithium ion batteries or other batteries. Here, the crystallized solution may contain uncrystallized cobalt ions and lithium ions. Therefore, it is desirable to mix the crystallized solution with the stripped solution before crystallization and subject it to re-crystallization, use it to adjust the cobalt ion concentration of the scrubbing solution used for the solvent that has extracted the cobalt ions, or mix it with the metal-containing solution after manganese extraction and subject it to cobalt extraction. By doing so, the cobalt ions and lithium ions can be circulated or retained and concentrated in the wet processes without losing them.

The metal-containing solution after extraction of cobalt ions mainly contains nickel ions and lithium ions. To recover nickel ions from the metal-containing solution, solvent extraction can be used to extract the nickel ions from the solution into the solvent. The solvent used in the nickel extraction preferably contains a carboxylic acid-based extracting agent. Examples of the carboxylic acid-based extracting agent include neodecanoic acid and naphthenic acid. Among them, the neodecanoic acid (Versatic Acid 10 (VA-10) manufactured by Shell Chemicals) is preferred because of its ability to extract nickel ions. The precipitates described above are expected to be generated even when extracting agents other than the carboxylic acid extracting agent are used. The equilibrium pH during the extraction is preferably 6.0 to 8.0, and more preferably 6.8 to 7.2.

The solvent which has extracted the nickel ions may optionally be subjected to one or more scrubbing processes using a scrubbing solution to remove lithium ions that may be contained in the solvent. The scrubbing solution can be, for example, a sulfuric acid solution having a pH of 5.0 to 6.0. Here, the resulting scrubbed solution may contain lithium ions. Therefore, it is preferable that a part or all of the scrubbed solution is mixed with the metal-containing solution after the cobalt extraction, and it is used as the extracting solution to carry out the nickel extraction. As a result, the lithium ions can be circulated or retained and concentrated in the wet processes without losing them. However, if the solvent containing the nickel ions does not contain lithium ions, the scrubbing may not be performed.

The solvent containing the nickel ions is then subjected to stripping using a stripping solution. A stripping solution used for the stripping may be any inorganic acid such as sulfuric acid, hydrochloric acid, and nitric acid, but sulfuric acid is preferable when a sulfate is obtained in the next crystallization. The pH is preferably in the range of 1.0 to 3.0, and more preferably 1.5 to 2.5. Although the O/A ratio and the number of times can be determined as needed, the O/A ratio is 5 to 1, and more preferably 4 to 2. The stripped solution may be electrolyzed and dissolved as necessary, and then heated to 40°C to 120°C during crystallization, so that the nickel ions can be crystallized as nickel salts such as nickel sulfate. This provides the nickel salt. Here, the crystallized solution may contain uncrystallized nickel ions and lithium ions. Therefore, the crystallized solution is mixed with the stripped solution before the crystallization and used for recrystallization, or used for adjusting the nickel concentration of the scrubbing solution with respect to the solvent containing the nickel ions, or mixed with the metal-containing solution after the cobalt extraction and used for the nickel extraction. By doing so, the nickel ions and lithium ions can be circulated or retained and concentrated in the wet processes without losing them.

In the hydroxylation step, the lithium hydroxide solution is prepared from the extracted solution such as a lithium sulfate solution after the nickel ions have been transferred to the solvent. The details of the hydroxylation step are not particularly limited as long as the lithium hydroxide solution can be prepared, but, for example, it includes a carbonation and chemical conversion method that uses calcium hydroxide after preparing lithium carbonate, a chemical conversion method that uses barium hydroxide, an electrodialysis method, and the like.

For the carbonation and chemical conversion method, first, a lithium carbonate solution is obtained by adding a carbonate to or blowing a carbon dioxide gas into a lithium-containing solution. Subsequently, in a so-called chemical conversion method, calcium hydroxide can be added to the lithium carbonate solution to generate the lithium hydroxide solution under the reaction formula: Li₂CO₃ + Ca(OH)₂ → 2LiOH + CaCO₃. Calcium ions that may remain in the solution can be removed with a cation exchange resin, a chelate resin, or the like.

When barium hydroxide is used, barium hydroxide can be added to the lithium-containing solution to obtain the lithium hydroxide solution based on the reaction: Li2SO4 + Ba(OH)2 → 2LiOH + BaSO4. At this time, barium that can be dissolved in the solution can be separated and removed using a cation exchange resin, a chelate resin, or the like.

For the electrodialysis, in a bipolar membrane electrodialysis device, the lithium-containing solution is introduced into a desalting chamber between an anion exchange membrane and a cation exchange membrane, and pure water is introduced into each of an acid chamber between a bipolar membrane and an anion exchange membrane and an alkaline chamber between a cation exchange membrane and a bipolar membrane, and a voltage is applied between the electrodes. Then, the lithium ions in the metal-containing solution in the desalting chamber move to the alkaline chamber, and in the alkaline chamber, pure water is decomposed into hydroxide ions by the bipolar membrane to obtain a lithium hydroxide solution. It should be noted that anions of inorganic acids such as sulfate ions in the metal-containing solution in the desalting chamber pass through the anion exchange membrane and move to the acid chamber. In electrodialysis, a desalted solution containing substantially no lithium salt is obtained as a result of the separation of most of the lithium salt from the metal-containing solution in the desalting chamber.

For crystallization after the hydroxylation step, the first and second crystallization steps described above can be applied. As a result, lithium hydroxide is obtained. As described earlier, the lithium hydroxide solution after the first crystallization step or the separated solution (lithium hydroxide solution) obtained in the second crystallization step can be used as a pH adjusting agent during neutralization or extraction, in which case the lithium can be circulated within the wet process.

### [Examples]

Next, the method for producing lithium hydroxide as described above was experimentally carried out and the effects thereof were confirmed, as described below. However, descriptions herein are merely for illustration, and are not intended to be limited thereto.

### (Example 1)

Lithium hydroxide was produced by sequentially performing the first crystallization step, the second crystallization step, and the washing step on a lithium hydroxide solution containing carbonate ions, as shown in figure 1. The lithium hydroxide solution used in this test was obtained from the hydroxylation process in the processing for lithium ion battery waste as shown in figure 2.

In the first crystallization step, the lithium hydroxide solution was heated to a temperature of 90°C in an air atmosphere and concentrated to a lithium ion concentration of about 28 g/L. This resulted in the precipitation of lithium carbonate-dominant crystals, which were separated by filtration.

In the second crystallization step, using an evaporator, the lithium hydroxide solution after the first crystallization step was heated to 60°C in a reduced pressure atmosphere of 0.06 atm and concentrated so that the lithium ion concentration became about 1.7 times, and then cooled to 25°C while maintaining the reduced pressure atmosphere to precipitate crystals containing lithium hydroxide (mainly LiOH·H₂O). The results of the component analysis of the crystals (LiOH before repulping) are shown in Table 1.

Thereafter, repulp washing was performed on the above crystals containing lithium hydroxide at a pulp density of 1000 g/L to produce lithium hydroxide. The results of the component analysis of this lithium hydroxide (purified LiOH) are also shown in Table 1. Table 1 shows the content on a mass basis (ppm by mass, % by mass), and the same is true for Table 2.

**[Table 1]**

| | ppm | % |
|---|---|---|
| | S | CO₃ |
| LiOH Before Repulping | 270 | 0.17 |
| Purified LiOH | 85 | 0.15 |

### (Comparative Example 1)

A lithium hydroxide solution similar to that of Example 1 was concentrated by heating to a temperature of 90°C in an air atmosphere to precipitate crystals containing lithium hydroxide, which were removed from the liquid by filtration. The results of the component analysis of the lithium hydroxide (produced LiOH) produced in this way are shown in Table 2.

**[Table 2]**

| | ppm | % |
|---|---|---|
| | S | CO₃ |
| Produced LiOH | 140 | 3.5 |

### (Discussion)

From Tables 1 and 2, it can be seen that the carbonate content in the lithium hydroxide crystals can be sufficiently reduced by performing the first and second crystallization steps as in Example 1. As shown in Table 1, the sulfur content in lithium hydroxide is significantly reduced when the washing step is performed after the second crystallization step.

In view of the foregoing, it is suggested that the method for producing lithium hydroxide described above may be able to produce lithium hydroxide with relatively high purity.

## Claims

1. A method for producing lithium hydroxide, comprising:
a first crystallization step of concentrating a lithium hydroxide solution comprising carbonate ions, and precipitating and separating crystals comprising lithium carbonate; and
a second crystallization step of concentrating the lithium hydroxide solution after the first crystallization step in a reduced pressure atmosphere to obtain crystals comprising lithium hydroxide.

2. The method for producing lithium hydroxide according to claim 1, wherein the lithium hydroxide solution is concentrated by heating it to a temperature of 60°C to 65°C in the second crystallization step.

3. The method for producing lithium hydroxide according to claim 2, wherein the lithium hydroxide solution is cooled after heating in the second crystallization step.

4. The method for producing lithium hydroxide according to claim 3, wherein the reduced pressure atmosphere during concentration is maintained during cooling of the lithium hydroxide solution in the second crystallization step.

5. The method for producing lithium hydroxide according to any one of claims 1 to 4, wherein the concentration of the lithium hydroxide solution in the second crystallization step is performed in a reduced pressure atmosphere of 0.06 atm or less.

6. The method for producing lithium hydroxide according to any one of claims 1 to 4, wherein the crystals comprising lithium hydroxide comprises sulfur, and
Wherein the method comprises a washing step of washing the crystals comprising lithium hydroxide with a washing solution to remove sulfur, after the second crystallization step.

7. The method for producing lithium hydroxide according to any one of claims 1 to 4, wherein the method comprises a hydroxylation step of preparing a lithium hydroxide solution from a lithium sulfate solution, and
wherein the lithium hydroxide solution obtained in the hydroxylation step is subjected to the first crystallization step.

8. The method for producing lithium hydroxide according to any one of claims 1 to 4, wherein the lithium hydroxide solution is concentrated by heating it to a temperature of 80°C to 90°C in the first crystallization step.

9. The method for producing lithium hydroxide according to any one of claims 1 to 4, wherein the concentration of the lithium hydroxide solution is performed in an air atmosphere in the first crystallization step.

10. The method for producing lithium hydroxide according to any one of claims 1 to 4, wherein the lithium hydroxide solution to be subjected to the first crystallization step is obtained by processing for lithium ion battery waste.

11. The method for producing lithium hydroxide according to any one of claims 1 to 4, wherein a part of the lithium hydroxide solution after the first crystallization step is used as a pH adjusting agent in the processing for lithium ion battery waste, and the remaining part of the lithium hydroxide solution is subjected to the second crystallization step.

12. The method for producing lithium hydroxide according to any one of claims 1 to 4, wherein a separated solution separated from the crystals comprising lithium hydroxide in the second crystallization step is used as a pH adjusting agent in the processing for lithium ion battery waste.
